# EUROPEAN PATENT APPLICATION

(11) **EP 2 857 775 A1**
(43) Date of publication of application: **08.04.2015**
(21) Application number: 13796615.6
(22) Date of filing: 30.05.2013
(51) Int. Cl.: F24J 2/30, F24J 2/46

(54) **SOLAR PHOTO-THERMAL RECEIVING DEVICE**

(30) Priority: 31.05.2012 CN 201210177201
(71) Applicant: Beijing Terasolar Energy Technologies Co., Ltd, Beijing 101102 (CN)
(72) Inventor: LIU, Yang, Beijing 100195 (CN)
(74) Representative: Ehnis, Tobias
(86) International application number: PCT/CN2013/000640
(87) International publication number: WO 2013/177951

(57) **Abstract**

A solar photo-thermal receiving device, consisting of a sealed structure (1) and a solar photo-thermal receiver (2) inside the sealed structure (1); the solar photo-thermal receiver (2) includes a secondary absorption heat-exchange pipe (17) and a primary absorption heat-exchange pipe (16); the temperature of a heat exchange medium inside the secondary absorption heat-exchange pipe (17) is lower than that of a heat exchange medium inside the primary absorption heat-exchange pipe (16); the secondary absorption heat-exchange pipe (17) receives the heat energy released by the primary absorption heat-exchange pipe (16) and/or receives the solar heat not received by the primary absorption heat-exchange pipe (16); the solar photo-thermal receiving device takes the heat away via the heat-exchange medium flowing inside the pipes of the solar photo-thermal receiver (2). The solar photo-thermal receiving device can be applied in a through solar photo-thermal concentration system, a Fresnel array solar photo-thermal concentration system and a tower type solar photo-thermal receiving device.

## Description

### FIELD OF THE TECHNOLOGY

The present invention relates to a solar photo-thermal receiving device applied in the field of solar thermal utilization.

### BACKGROUND

As the utilization of renewable resources such as solar flourishes all over the world, concentrating solar power (CSP) has been known to peoples gradually. In the CSP system, the heat absorption and the heat transfer portions play a very important role. The heat exchange medium in the solar collector system mainly uses heat transfer oil at present, which produces steam and thus drives a conventional steam turbine to drive a generator set to generate power after flowing through a heat transfer oil-steam heat exchanger. Currently, a substitute for the heat exchange medium of international solar collector technologies is molten salt materials, for instance, the molten salt medium collector studied by Italian ENEA (European Nuclear Energy Agency). A molten salt medium generally has a high crystallization point, mostly around 230∼260°C, but current molten salts are mainly used for thermal energy storage. The most promising heat exchange technology is the Direct Steam Generation (DSG) technology which uses water as a heat exchange medium directly. This technology has been used for many years, its operation principle is similar to that of a steam boiler heating pipeline, where water is used as a working medium and low temperature water is injected into a heat absorption pipe at an end thereof, absorbs heat to be warmed up gradually during traveling along the pipe axially, and becomes saturated steam after reaching its boiling point and then further becomes superheated steam when continuously absorbing heat.

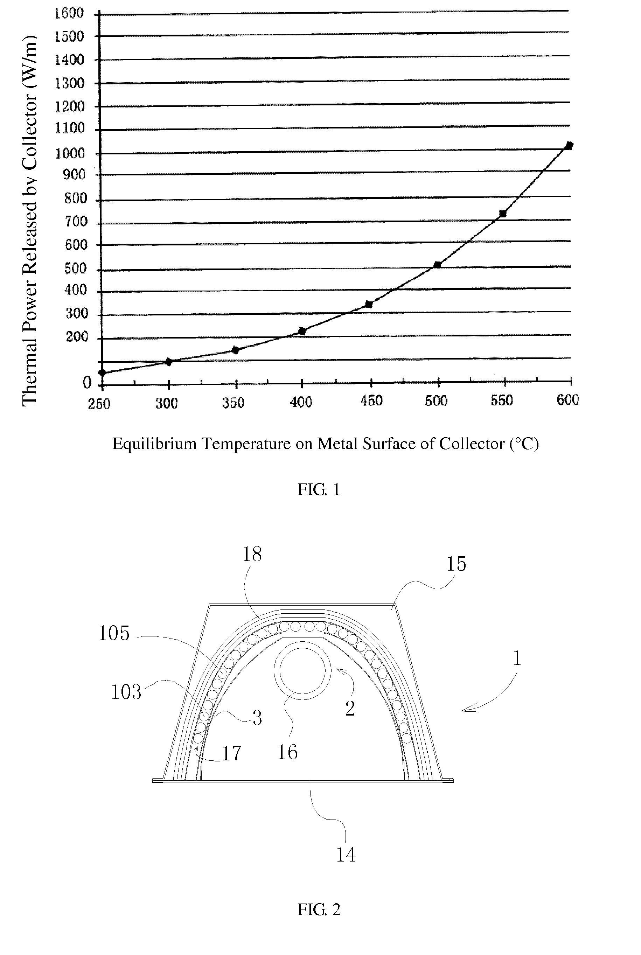

The current solar photo-thermal receiving device mainly includes a through solar photo-thermal collector system, a Fresnel array solar photo-thermal receiving device and a central tower type solar photo-thermal receiving device. A common through solar collector system is composed of a plurality of evacuated collectors in series, as shown in FIG. 1, where the horizontal coordinates represent equilibrium temperature of metal surface of the collector with unit of °C, and the longitudinal coordinates represent thermal power released by the collector with unit of W/m. As for a common evacuated collector, the heat loss per unit length increases as the temperature of metal surface of the collector rises. It is obvious that when the external temperature rises, the amount of loss is evidently increases, for instance, when the temperature of the pipe wall of the collector is 400°C, the thermal power loss per unit length is 250W/m, when the temperature of the pipe wall is 200°C, the thermal power loss per unit length is 100W/m. This kind of collector is in a static vacuum environment, however, with the increase of its service life, the internal vacuum level will decrease, and the efficiency in thermal utilization will decline year by year; moreover, the evacuated collector is expensive in itself, and cost for replacing it is also extraordinarily expensive; furthermore, since absorption pipes inside the collector have a small size, requirements for a curved reflector in the mirror field are demanding, and meanwhile higher requirements are placed upon the mounting of the curved reflector, the mounting of frames supporting the curved reflector and the tracking precision of the curved reflector, the through solar photo-thermal concentration system remains a high cost. As for the Fresnel array solar photo-thermal receiving device, due to the structure and tracking of the Fresnel concentration system in itself, the receiving opening thereof is bigger than that required by the through solar thermal concentration system, and the concentration ratio thereof is relatively low; it is difficult to implement in a vacuum environment, correspondingly, heat loss is large, usually about twice as large as the heat loss per unit length in the evacuated collector, and thus how to reduce the heat loss of a traditional Fresnel system and improve the heat absorption efficiency has become an important research direction. As for the central tower type solar photo-thermal receiving device, it is generally an empty cavity type receiver, this receiver can only satisfy the receiving in a certain direction, and is incapable of receiving sunlight incident in other directions; the development of a cost-effective and simple receiver is also under further study.

### SUMMARY

The present invention aims to overcome the above problems in the prior art, and provides a high efficient solar photo-thermal receiving device, which may be applied in the field of solar photo-thermal application.

The present invention provides a solar photo-thermal receiving device, characterized in that the solar photo-thermal receiving device consists of a sealed structure and a solar photo-thermal receiver inside the sealed structure; the solar photo-thermal receiver includes a secondary absorption heat-exchange pipe and a primary absorption heat-exchange pipe, the temperature of a heat exchange medium inside the secondary absorption heat-exchange pipe is lower than that of a heat exchange medium inside the primary absorption heat-exchange pipe; the secondary absorption heat-exchange pipe receives the heat energy released by the primary absorption heat-exchange pipe and/or receives the solar heat not received by the primary absorption heat-exchange pipe; the solar photo-thermal receiving device takes the heat away via the heat-exchange medium flowing inside the pipes of the solar photo-thermal receiver; so that the secondary absorption heat-exchange pipe can absorb the heat dispersed by the primary absorption heat-exchange pipe, thereby improving the efficiency of system thermal utilization.

Furthermore, the solar photo-thermal receiver also includes a secondary concentration device arranged between the secondary absorption heat-exchange pipe and the primary absorption heat-exchange pipe, and the secondary concentration device assists the primary absorption heat-exchange pipe in obtaining more concentration heat.

Preferably, the secondary absorption heat-exchange pipe is arranged as close to the secondary concentration device so as to reduce the temperature of the secondary concentration device, reduce the heat radiation, increase the absorption of the heat dispersed by the primary absorption heat-exchange pipe and prolongs the life span of the secondary absorption heat-exchange pipe.

Furthermore, the sealed structure includes a cover glass arranged at an opening of the secondary concentration device of the solar photo-thermal receiver, a coating material for covering the back of the solar photo-thermal receiver, and an end plate of the solar photo-thermal receiving device, all three of them form a closed space; concentrated sunlight passes through the cover glass into the inside of the sealed structure and is incident onto surfaces of the secondary concentration device and the absorption heat-exchange device.

Furthermore, the secondary absorption heat-exchange pipe and the primary absorption heat-exchange pipe are communicated by connecting an outflow end of the heat exchange medium of the secondary absorption heat-exchange pipe with an inflow end of the heat exchange medium of the primary absorption heat-exchange pipe.

Furthermore, the sealed structure is closed at both ends, and is composed of one or more glass pipes in series, and its inside contains the solar photo-thermal receiver and/or the secondary concentration device.

Preferably, the inside of the sealed structure is in a static vacuum state or in a dynamic vacuum state so as to reduce the heat loss inside thereof.

Furthermore, the secondary concentration device is arranged in the vicinity of the solar photo-thermal receiver, to concentrate the sunlight that passes through the cover glass or glass sleeve but is not directly incident onto the surface of the primary absorption heat-exchange pipe and then secondarily reflect the sunlight onto the surface of the primary absorption heat-exchange pipe; while the solar photo-thermal receiver receives directly incident sunlight and the sunlight secondarily reflected onto the surface thereof, to convert the sunlight into heat and transport the heat outside the system.

Furthermore, the secondary absorption heat-exchange pipe includes a plurality of metal tubes arranged at the rear of the secondary concentration device; the secondary absorption heat-exchange pipe has a low external temperature, so can absorb the heat released by the primary absorption heat-exchange pipe, thereby reducing the heat released from the solar photo-thermal receiving device to the outside and improving the efficiency of thermal utilization of the system.

Furthermore, the heat exchange medium flows through the secondary absorption heat-exchange pipe, and then flows through the primary absorption heat-exchange pipe, completing a further heat exchange.

Furthermore, the heat exchange medium flowing inside the solar photo-thermal receiver is heat transfer oil (Dowtherm), molten salt, water or gas.

Furthermore, the solar photo-thermal receiving device is applied in the through solar photo-thermal concentration system, a Fresnel array type photo-thermal concentration system and a tower type solar photo-thermal concentration system.

### BRIEF DESCRIPTION OF THE DRAWINGS

FIG. 1 is a graph of changes in power loss per unit length over changes in temperature of pipe walls of a common evacuated collector;
FIG. 2 is a cross-sectional schematic view of the structure of a solar photo-thermal receiving device according to a first embodiment of the present invention;
FIG. 3 is a cross-sectional schematic view of the structure of a solar photo-thermal receiving device according to a second embodiment of the present invention;
FIG. 4 is a cross-sectional schematic view of the structure of a solar photo-thermal receiving device according to a third embodiment of the present invention.

### DETAILED DESCRIPTION

Embodiments of the present invention will be described hereunder in details with reference to the accompanying drawings.

FIG. 2 is a cross-sectional schematic view of the structure of a solar photo-thermal receiving device according to a first embodiment of the present invention. As show in FIG. 2, the solar photo-thermal receiving device consists of a sealed structure 1 and a solar photo-thermal receiver 2 inside the sealed structure 1; the solar photo-thermal receiver 2 includes a secondary absorption heat-exchange pipe 17 and a primary absorption heat-exchange pipe 16, the temperature of a heat exchange medium inside the secondary absorption heat-exchange pipe 17 is lower than that of a heat exchange medium inside the primary absorption heat-exchange pipe 16; the secondary absorption heat-exchange pipe 17 receives the heat energy released by the primary absorption heat-exchange pipe 16 and/or receives the solar heat not received by the primary absorption heat-exchange pipe 16; the solar photo-thermal receiving device takes the heat away via the heat-exchange medium flowing inside the solar photo-thermal receiver 2; the solar photo-thermal receiver 2 also includes a secondary concentration device 3 arranged between the secondary absorption heat-exchange pipe 17 and the primary absorption heat-exchange pipe 16, and the secondary concentration device 3 assists the primary absorption heat-exchange pipe 16 in obtaining more concentration heat. The solar photo-thermal receiving device is a linear solar receiving device, which is composed of at least one linear solar photo-thermal receiver arranged at a focal line of a linear concentration system. The sealed structure 1 includes a cover glass 14 arranged at an opening of the secondary concentration device 3 of the solar photo-thermal receiver, a coating material 15 for covering the back of the solar photo-thermal receiver, and an end plate of the solar photo-thermal receiving device, all three of them forming a closed space. Internal space of the sealed structure 1 is made to be in a micro positive pressure state by means of filling clear air or an inert gas, to reduce the probability of dust into the inside of the sealed system; concentrated sunlight passes through the cover glass 14 into the inside of the sealed structure 1, and is incident onto surfaces of the secondary concentration device 3 and the primary absorption heat-exchange pipe 16. The secondary concentration device 3 is arranged in the vicinity of the primary absorption heat-exchange pipe 16, to concentrate the sunlight that passes through the cover glass 14 but is not directly incident onto the surface of the primary absorption heat-exchange pipe 16 and then secondarily reflect the sunlight onto the surface of the primary absorption heat-exchange pipe 16, while the primary absorption heat-exchange pipe 16 receives directly incident sunlight and the sunlight secondarily reflected onto the surface thereof, to convert the sunlight into heat and transport the heat outside the system. The secondary absorption heat-exchange pipe 17 has a plurality of array-arranged metal tubes, for instance, an array of metal tubes 103 and metal tubes 105 arranged at the rear of the secondary concentration device 3; preferably, the pipe surface of the secondary absorption heat-exchange pipe 17 is provided with a fin structure, more convenient to absorb the heat released by the primary absorption heat-exchange pipe 16; the temperature of the heat exchange medium inside the secondary absorption heat-exchange pipe 17 is lower than that of the heat exchange medium inside the primary absorption heat-exchange pipe 16, so that the secondary absorption heat-exchange pipe 17 is able to absorb the heat released by the primary absorption heat-exchange pipe 16, decreasing the temperature of the posterior region of the solar photo-thermal receiver, thereby reducing the heat released from the solar photo-thermal receiving device to the outside. The heat exchange medium flowing through the secondary absorption heat-exchange pipe absorbs a part of the heat dispersed by the primary absorption heat-exchange pipe, and thus its temperature rises; the heat exchange medium then flows through the primary absorption heat-exchange pipe, and receives the concentrated sunlight energy to further elevate the temperature and then carry out heat exchange and heat output. Since inlet temperature of the heat exchange medium in a common solar heat exchange circulating system of a common solar photo-thermal concentration system is much lower than outlet temperature, such design allows temperature difference between a majority of the thermal interface of the heat exchanger and the environment to be reduced greatly; meanwhile, the secondary concentration device 3 is close to the low-temperature secondary absorption heat-exchange pipe 17, and thus may remain a relatively low temperature, which not only can effectively prolong reliability and life span of the secondary concentration device 3, but also can reduce thermal exposure of the secondary concentration device 3. In summary, overall efficiency of the system is improved. Furthermore, the heat exchange medium flowing inside the solar photo-thermal receiving device is heat transfer oil (Dowtherm), molten salt system, water or gas (air, compressed air or inert gas); preferably, the heat exchange medium is water, which take places a phase-change heat exchange inside the solar photo-thermal receiving device and completes a direct steam generation (DSG) inside the system. In addition, a thermal insulation device is arranged at the rear of the secondary absorption heat-exchange pipe of the solar photo-thermal receiver, specifically, a thermal insulating material 18 with low thermal conductivity and high temperature resistance, for example, an aerogel thermal insulating material, is arranged outside the array-arranged metal tubes, to further prevent the heat from releasing to the outside of the system. Moreover, in this embodiment, the heat exchange medium inflows from an inlet of a secondary absorption heat exchange device and then arrive at a terminal of the secondary absorption heat exchange device, following by getting into an inlet of a primary absorption heat exchange device and then flowing back to a terminal of the primary absorption heat-exchange device parallel to the secondary absorption heat exchange device. The inlet of the secondary absorption heat exchange device is adjacent to the terminal of the primary absorption heat exchange device, and thus input position and output position of the heat exchange medium of the solar photo-thermal receiving device are adjacent to each other, reducing the piping cost and the heat loss, and facilitating manipulation and regulation of system parameters. The present invention may achieve solar photo-thermal absorption with a high efficiency: according to a preliminary estimate, the secondary absorption heat-exchange pipe 17 can receive more than 40% of the heat released by the primary absorption heat-exchange pipe 16 (in a conventional structure, this part of heat will be scattered into the environment after passing through the thermal insulation device). In a common DSG receiving device, assuming that the primary absorption heat-exchange pipe 16 can normally receive 85% of the total heat in the device, that is, the direct heat loss accounts for 15% of the total system heat, then since the secondary absorption heat-exchange pipe 17 can receive 40% of the heat loss, that is, can recover 6% of the total system heat, which means an increase of 6% in the overall receiving capacity of the solar photo-thermal receiving device as roughly estimated; a significant return can be obtained after 20 years of normal operation.

FIG. 2 is a cross-sectional schematic view of the structure of a solar photo-thermal receiving device according to a first embodiment of the present invention. As shown in FIG. 2, the solar photo-thermal receiving device includes the sealed structure 1 and the solar photo-thermal receiver 2 inside the sealed structure 1. The solar photo-thermal receiver 2 may include the secondary absorption heat-exchange pipe 17 and the primary absorption heat-exchange pipe 16, and the primary absorption heat-exchange pipe 16 is arranged at a focal line of reflected sunlight, absorbing most of the heat in solar mirror field; the secondary absorption heat-exchange pipe 17 may be arranged in the periphery or at the back of the primary absorption heat-exchange pipe 16, and generally does not directly receive reflected sunlight, only when sunlight tracking accuracy decreases or Fresnel reflector itself has a blurry focusing, a part of the sunlight is incident onto the surface of the secondary absorption heat-exchange pipe 17. In addition, the secondary absorption heat-exchange pipe 17 as an inlet pipe for the primary absorption heat-exchange pipe 16 is connected to the primary absorption heat-exchange pipe 16 during practical use, since the inlet pipe has a low temperature before being heated and is less heated, the temperature of the heat exchange medium inside the secondary absorption heat-exchange pipe 17 is lower than that of the heat exchange medium inside the primary absorption heat-exchange pipe 16. The secondary absorption heat-exchange pipe 17 mainly receives heat radiated from high-temperature walls of the primary absorption heat-exchange pipe 16. The secondary absorption heat-exchange pipe 17 receives the heat energy released by the primary absorption heat-exchange pipe 16 and/or receives the heat energy from sunlight that is not directly incident to the primary absorption heat-exchange pipe 16 due to factors such as a decrease of sunlight tracking accuracy and blurry focusing of the reflector. The solar photo-thermal receiving device takes the heat away via the heat-exchange medium flowing inside the solar photo-thermal receiver 2.

The solar photo-thermal receiver 2 may also include the secondary concentration device 3 arranged between the secondary absorption heat-exchange pipe 17 and the primary absorption heat-exchange pipe 16. Specifically, the secondary concentration device 3 may be a parabolic mirror and can help an object arranged therein, such as a collector system, to obtain a wider range of sunlight incident onto a narrower receiving surface of the object. In this embodiment, the secondary concentration device 3 may assist the primary absorption heat-exchange pipe 16 in obtaining more concentration heat. The solar photo-thermal receiving device may be a linear solar receiving device, and is composed of at least one linear sealed structure and at least one solar photo-thermal receiver in the linear sealed structure. Optionally, the solar photo-thermal receiving device includes one linear solar photo-thermal receiver and one linear sealed structure, both of which are arranged at a focal line of a linear concentration system. The sealed structure 1 may include a cover glass 14 arranged at an opening of the secondary concentration device 3 of the solar photo-thermal receiver 2, a coating material 15 for covering the back of the solar photo-thermal receiver 2 and an end plate (not shown in figures) of the solar photo-thermal receiving device, all three of them form a closed space. Internal space of the sealed structure 1 is made to be in a micro positive pressure state by means of filling clear air or an inert gas, to reduce the probability of dust into the inside of the sealed system, the micro positive pressure state may be 0.10∼0.15MPa. Concentrated sunlight passes through the cover glass 14 into the inside of the sealed structure 1, and is incident onto a mirror surface of the secondary concentration device 3 and a surface of the primary absorption heat-exchange pipe 16, where the sunlight incident onto the mirror surface of the secondary concentration device 3 will be reflected onto the surface of the primary absorption heat-exchange pipe 16 again. The secondary concentration device 3 is arranged in the vicinity of the primary absorption heat-exchange pipe 16, to concentrate the sunlight that passes through the cover glass 14 but is not directly incident onto the surface of the primary absorption heat-exchange pipe 16 and then secondarily reflect the sunlight onto the surface of the primary absorption heat-exchange pipe 16. Specifically, the primary absorption heat-exchange pipe 16 may be arranged at the front portion of the secondary concentration device 3, i.e. an end near the position of sunlight incidence. The distance between the primary absorption heat-exchange pipe 16 and the secondary concentration device 3 may be less than or equal to 50mm, and the secondary absorption heat-exchange pipe 17 may be arranged close to the back of the secondary concentration device 3, i.e. a side of the secondary concentration device 3 towards the outside atmosphere, more specifically, the secondary absorption heat-exchange pipe 17 is arranged at a side of the secondary concentration device 3 towards the secondary absorption cover glass 14 and/or the coating material 15, and is arranged in a form of an array. While the primary absorption heat-exchange pipe 16 receives directly incident sunlight and the sunlight secondarily reflected onto the surface thereof, to convert the sunlight into heat and transport the heat outside the solar photo-thermal receiving device. The secondary absorption heat-exchange pipe 17 has a plurality of array-arranged metal tubes, for instance, an array of metal tubes 103 and metal tubes 105 arranged at the rear of the secondary concentration device 3. Optionally, the pipe surface of the secondary absorption heat-exchange pipe 17 is provided with a fin structure, more convenient to absorb the heat released by the primary absorption heat-exchange pipe 16. The temperature of the heat exchange medium inside the secondary absorption heat-exchange pipe 17 is lower than that of the heat exchange medium inside the primary absorption heat-exchange pipe 16, so that the secondary absorption heat-exchange pipe 17 is able to absorb the heat released by the primary absorption heat-exchange pipe 16, decreasing the temperature of the posterior region of the solar photo-thermal receiver 2, thereby reducing the heat released from the solar photo-thermal receiving device to the outside. The "posterior region of the solar photo-thermal receiver 2" herein refers to portions between the secondary concentration device 3 and the coating material 15, between the secondary concentration device 3 and the cover glass 14, and between the secondary concentration device 3 and the end plate. The heat exchange medium flowing through the secondary absorption heat-exchange pipe 17 absorbs a part of the heat dispersed by the primary absorption heat-exchange pipe 16, and thus its temperature rises; the heat exchange medium then flows through the primary absorption heat-exchange pipe 16, and receives the concentrated sunlight energy to further elevate the temperature and then carry out heat exchange and heat output. Since inlet temperature of the heat exchange medium in a common solar heat exchange circulating system is much lower than outlet temperature, such design allows temperature difference between a majority of the thermal interface of the heat exchanger and the environment to be reduced greatly. Meanwhile, the secondary concentration device 3 is close to the low-temperature secondary absorption heat-exchange pipe 17, and thus may remain a relatively low temperature, which not only can effectively prolong reliability and life span of the secondary concentration device 3, but also can reduce thermal exposure of the secondary concentration device 3. In summary, overall efficiency of the solar photo-thermal receiving device can be improved.

Furthermore, the heat exchange medium flowing inside the solar photo-thermal receiving device is heat transfer oil, molten salt system, water or gas, where the heat transfer oil may be Dowt herm, and the gas may be air, compressed air or inert gas. Optionally, the heat exchange medium is water, which take places a phase-change heat exchange inside the solar photo-thermal receiving device and completes a direct steam generation (DSG) inside the solar photo-thermal receiving device. In addition, a thermal insulation device is arranged at the rear of the secondary absorption heat-exchange pipe 17 of the solar photo-thermal receiver 2, specifically, a thermal insulating material 18 with low thermal conductivity and high temperature resistance, for example, an aerogel thermal insulation material, is arranged outside the array-arranged metal tubes, to further prevent the heat from releasing to the outside of the solar photo-thermal receiving device. Moreover, in this embodiment, the heat exchange medium inflows from an inlet of the secondary absorption heat-exchange pipe 17 and then arrive at a terminal of the secondary absorption heat-exchange pipe 17, following by getting into an inlet of the primary absorption heat-exchange pipe 16 and then flowing back to a terminal of the primary absorption heat-exchange pipe 16 parallel to the secondary absorption heat-exchange pipe 17. The inlet of the secondary absorption heat-exchange pipe 17 is adjacent to the terminal of the primary absorption heat-exchange pipe 16, and thus input position and output position of the heat exchange medium of the solar photo-thermal receiving device are adjacent to each other, reducing the piping cost and the heat loss, and facilitating manipulation and regulation of parameters of the solar photo-thermal receiving device.

The solar photo-thermal receiving device of the present invention may achieve solar photo-thermal absorption with a high efficiency, according to a preliminary estimate, the secondary absorption heat-exchange pipe 17 can receive more than 40% of the heat released by the primary absorption heat-exchange pipe 16, whereas in a conventional structure, this part of heat will be scattered into the environment after passing through the thermal insulation device. In a common DSG receiving device, assuming that the primary absorption heat-exchange pipe 16 can normally receive 85% of the total heat in the device, that is the direct heat loss accounts for 15% of the total heat of the solar photo-thermal receiving device, then since the secondary absorption heat-exchange pipe 17 can receive 40% of the heat loss, that is, can recover 6% of the total heat of the solar photo-thermal receiving device, which means an increase of 6% in the overall receiving capacity of the solar photo-thermal receiving device as roughly estimated, and thus a significant return can be obtained after 20 years of normal operation.

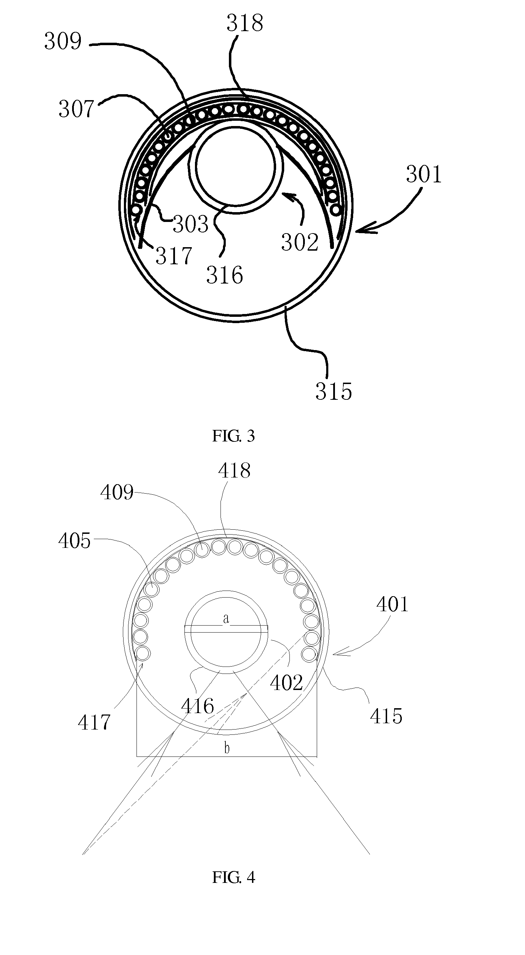

FIG. 3 is a cross-sectional schematic view of the structure of a solar photo-thermal receiving device according to a second embodiment of the present invention. As shown in FIG. 3, the solar photo-thermal receiving device comprises a sealed structure 301, a solar photo-thermal receiver 302 inside the sealed structure 301, and a secondary concentration device 303. The solar photo-thermal receiver 302 includes a secondary absorption heat-exchange pipe 317 and a primary absorption heat-exchange pipe 316, so as to implement input and output of the heat exchange medium at the same side. The sealed structure 301 is closed at both ends, and is composed of one or more glass pipes 315 in series; the concentrated sunlight passes through the glass pipe 315 into the inside of the sealed structure 301, and is incident onto surfaces of the secondary concentration device 303 and the primary absorption heat-exchange pipe 316. Preferably, since the glass pipe has good mechanical bearing capacity, the inside of the sealed structure 301 is in a static vacuum state or in a dynamic vacuum state so as to further reduce the heat loss inside thereof. The secondary concentration device 303 is arranged in the vicinity of the primary absorption heat-exchange pipe 316, to concentrate the sunlight that passes through the glass pipe 315 but is not directly incident onto the surface of the primary absorption heat-exchange pipe 316 and then secondarily reflect the sunlight onto the surface of the primary absorption heat-exchange pipe 316; while the primary absorption heat-exchange pipe 316 receives directly incident sunlight and the sunlight secondarily reflected onto the surface thereof, to convert the sunlight into heat and transport the heat outside the system. The secondary absorption heat-exchange pipe 317 includes a plurality of metal tubes arranged parallel to each other in an array along the secondary concentration device 303, for instance, metal tubes 307 and metal tubes 309; the secondary absorption heat-exchange pipe 317 has a low external temperature, so can absorb more heat released by the primary absorption heat-exchange pipe 316, reducing temperature difference between a thermal insulating material 318 and the environment, and thereby reducing the heat released from the system to the outside and improving the efficiency of thermal utilization of the system. The thermal insulating material 318 with low thermal conductivity and high temperature resistance is arranged outside the array-arranged metal tubes, for example, an aerogel thermal insulating material, to prevent the heat from releasing to the outside of the system.

FIG. 3 is a cross-sectional schematic view of the structure of a solar photo-thermal receiving device according to a second embodiment of the present invention. As shown in FIG. 3, the solar photo-thermal receiving device includes the sealed structure 301, the solar photo-thermal receiver 302 inside the sealed structure 301, and the secondary concentration device 303. The solar photo-thermal receiver 302 may include the secondary absorption heat-exchange pipe 317 and the primary absorption heat-exchange pipe 316 so as to implement input and output of the heat exchange medium at the same side, for instance, the secondary absorption heat-exchange pipe 317 and the primary absorption heat-exchange pipe 316 are connected at the same end to run through as a whole, so as to achieve input and output at the same end by inflowing from the secondary absorption heat-exchange pipe 317 and outflowing from the primary absorption heat-exchange pipe 316. The sealed structure 301 may be closed at both ends, and is composed of one or more glass pipes 315 in series, and the concentrated sunlight passes through the glass pipe 315 into the inside of the sealed structure 301, and is incident onto surfaces of the secondary concentration device 303 and the primary absorption heat-exchange pipe 316. Optionally, since the glass pipe 315 has good mechanical bearing capacity, the sealed structure 301 can be evacuated directly, so that the inside of the sealed structure 301 is in a static vacuum state or in a dynamic vacuum state so as to further reduce the heat loss inside thereof. The secondary concentration device 303 is arranged in the vicinity of the primary absorption heat-exchange pipe 316, for instance, about 10mm∼50mm from the primary absorption heat-exchange pipe 316. The secondary concentration device 303 will concentrate the sunlight that passes through the glass pipe 315 but is not directly incident onto the surface of the primary absorption heat-exchange pipe 316 and then secondarily reflect the sunlight onto the surface of the primary absorption heat-exchange pipe 316, while the primary absorption heat-exchange pipe 316 receives directly incident sunlight and the sunlight secondarily reflected onto the surface thereof, to convert the sunlight into heat and transport the heat outside the solar photo-thermal receiving device. The secondary absorption heat-exchange pipe 317 includes a plurality of metal tubes arranged parallel to each other in an array along the secondary concentration device 303, for instance, metal tubes 307 and metal tubes 309. The secondary absorption heat-exchange pipe 317 has a low external temperature, so can absorb more heat released by the primary absorption heat-exchange pipe 316, reducing temperature difference of the thermal insulating material 318, and thereby reducing the heat released from the solar photo-thermal receiving device to the outside and improving the efficiency of thermal utilization of the solar photo-thermal receiving device. The thermal insulating material 318 with low thermal conductivity and high temperature resistance is arranged outside the array-arranged metal tubes, for example, an aerogel thermal insulating material, to prevent the heat from releasing to the outside of the system.

FIG. 4 is a cross-sectional schematic view of the structure of a solar photo-thermal receiving device according to a third embodiment of the present invention. FIG. 4 shows the embodiment that the solar photo-thermal receiving device is applied to a through solar photo-thermal concentration system. A traditional through solar photo-thermal concentration system is arranged such that the energy may be obtained and transported by a plurality of evacuated collectors in series; the cost of a single evacuated collector is expensive, and it is difficult to ensure that a highly-efficient vacuum state is maintained for a long time, especially during the operational life (generally 25 years) as pre-set by a power plant, which will necessarily cause an annual increase of the heat loss of the evacuated collector over an extended period of time; in the through solar photo-thermal concentration system, an efficient receiving width of the optical system corresponds to the diameter of metallic heat-absorption tubes inside the glass pipe, thus high requirements are placed upon the manufacture and mounting of the curved reflector, and due to its narrow receiving wide and annual heat loss, higher requirements are placed upon the high-accuracy manufacture and mounting, the mounting of frames in mirror field, and the solar-tracking of the mirror, all these make the solar photo-thermal concentration system remain high overall cost. As shown in FIG. 4, the solar photo-thermal receiving device according to this embodiment includes a sealed structure 401 and a solar photo-thermal receiver 402 inside the sealed structure 401; the solar photo-thermal receiver 402 includes a secondary absorption heat-exchange pipe 417 and a primary absorption heat-exchange pipe 416; the secondary absorption heat-exchange pipe 417 and the primary absorption heat-exchange pipe 416 are arranged in parallel; the secondary absorption heat-exchange pipe 417 and the primary absorption heat-exchange pipe 416 carry the heat away via the heat exchange medium flowing inside thereof; the sealed structure 401 is a glass pipe that is closed at both ends and includes the solar photo-thermal receiver 402 inside thereof; internal space of the sealed structure 401 is in an atmospheric pressure state or a micro positive pressure state, or the internal of the sealed structure is in a static vacuum state or in a dynamic vacuum state; in the optical design of the solar photo-thermal receiving device according to this embodiment, the primary absorption heat-exchange pipe 416 still is treated as a light-concentrating focus, when concentrated sunlight deviates from and goes beyond the range of diameter a of the primary absorption heat-exchange pipe 416 due to insufficient reflector accuracy and/or frame accuracy and/or tracking accuracy, the sunlight out of the range, as long as it is still in the range of the fan-opening width b of the array of the secondary absorption heat-exchange pipe 417, may be received by the secondary absorption heat-exchange pipe 417, thus the width of the efficient optical receiving opening of the solar photo-thermal receiving device becomes larger (changed from a to b, as shown in FIG. 4, the primary absorption heat-exchange pipe 416 has a diameter of a and the fan-opening of the array of the secondary absorption heat-exchange pipe 417 has a width of b), meanwhile the secondary absorption heat-exchange pipe 417 that is arranged in the annular space of the sealed structure 401 in the form of fan may also absorb the heat released by an outer surface of the primary absorption heat-exchange pipe 416, the thermal utilization efficiency of the system is improved comprehensively, and even in a case where the system has a decreased vacuum level or is in an atmospheric pressure state, the efficiency of overall thermal utilization of the collector is also improved; in addition, a secondary concentration device may also be added between the secondary absorption heat-exchange pipe 417 and the primary absorption heat-exchange pipe 416 to further improve light-gathering capacity of the primary absorption heat-exchange pipe. The thermal insulation material 418 with low thermal conductivity and high temperature resistance is arranged outside the array-arranged metal tubes, for example, an aerogel thermal insulation material, to prevent the heat from releasing to the outside of the system. The present design enables the width of the efficient optical reception opening to become larger, and lower the requirements for light-concentrating accuracy of a through solar photo-thermal mirror field system, that is, it can improve the tolerance range of a curved mirror processing, the tolerance range of the mirror field mounting and the tolerance range of solar tracking and concentrating, thereby the purpose of reducing the overall cost of solar photo-thermal concentration system can be realized.

FIG. 4 is a cross-sectional schematic view of the structure of a solar photo-thermal receiving device according to a third embodiment of the present invention. FIG. 4 shows the embodiment that the solar photo-thermal receiving device is applied to a through solar photo-thermal concentration system. A traditional through solar photo-thermal concentration system is arranged such that the energy may be obtained and transported by a plurality of evacuated collectors in series. However, the cost of a single evacuated collector is expensive, and it is difficult to ensure that a highly-efficient vacuum state is maintained for a long time, especially during the operational life (generally 25 years) as pre-set by a power plant, which will necessarily cause an annual increase of the heat loss of the evacuated collector over an extended period of time. In the through solar photo-thermal concentration system, an efficient receiving width of the optical system corresponds to the diameter of metallic heat-absorption tubes inside the glass pipe, thus high requirements are placed upon the manufacture and mounting of the curved reflector, and due to its narrow receiving range and annual heat loss, higher requirements are placed upon the high-accuracy manufacture and mounting, the mounting of frames in the mirror field, and the solar-tracking of the mirror, all these makes the solar photo-thermal concentration system remain high overall cost.

As shown in FIG. 4, the solar photo-thermal receiving device according to this embodiment includes the sealed structure 401 and the solar photo-thermal receiver 402 inside the sealed structure 401. The sealed structure 401 may be closed at both ends, and is composed of one or more glass pipes 415 in series. The solar photo-thermal receiver 402 includes the secondary absorption heat-exchange pipe 417 and the primary absorption heat-exchange pipe 416; the secondary absorption heat-exchange pipe 417 and the primary absorption heat-exchange pipe 416 are adjacent and arranged in parallel. The secondary absorption heat-exchange pipe 417 has a plurality of array-arranged metal tubes, for instance, metal tubes 405 and metal tubes 409 as shown in the Figure. The secondary absorption heat-exchange pipe 417 and the primary absorption heat-exchange pipe 416 carry the heat away via the heat exchange medium flowing inside thereof. The sealed structure 401 is a glass pipe that is closed at both ends and includes the solar photo-thermal receiver 402 inside thereof. Internal space of the sealed structure 401 is in an atmospheric pressure state or a micro positive pressure state, and the internal space of the sealed structure 401 may also be in a static vacuum state or in a dynamic vacuum state.

In the optical design of the solar photo-thermal receiving device according to this embodiment, the primary absorption heat-exchange pipe 416 still is treated as a light-concentrating focal line. When concentrated sunlight deviates from and goes beyond the range of diameter a of the primary absorption heat-exchange pipe 416 due to one of the following reasons or a combination thereof: insufficient reflector accuracy, insufficient frame accuracy and insufficient tracking accuracy, the sunlight out of the range, as long as it is still in the range of the fan-opening width b of the array of the secondary absorption heat-exchange pipe 417, specifically, b may be the distance between two metal tubes farthest from each other in the secondary absorption heat-exchange pipe 417, may be received by the secondary absorption heat-exchange pipe 417, thus the width of the efficient optical receiving opening of the solar photo-thermal receiving device becomes larger, specifically it may be changed from a to b, as shown in FIG. 4, the primary absorption heat-exchange pipe 416 has a diameter of a and the fan-opening of the secondary absorption heat-exchange pipe 417 has a width of b. Meanwhile the secondary absorption heat-exchange pipe 417 that is arranged in the annular space of the sealed structure 401 in the form of fan may also absorb the heat released by an outer surface of the primary absorption heat-exchange pipe 416, the efficiency of thermal utilization of the solar photo-thermal receiving device is improved comprehensively, and even in a case where the solar photo-thermal receiving device has a decreased vacuum level or is in an atmospheric pressure state, the efficiency of overall thermal utilization of the collector is also improved. In addition, a secondary concentration device (not shown in the figure) may also be added between the secondary absorption heat-exchange pipe 417 and the primary absorption heat-exchange pipe 416 to further improve light-gathering capacity of the primary absorption heat-exchange pipe 416. The thermal insulation material 418 with low thermal conductivity and high temperature resistance is arranged outside the array-arranged metal tubes, for example, an aerogel thermal insulation material, to prevent the heat from releasing to the outside of the solar photo-thermal receiving device. The present design enables the width of the efficient optical reception opening to become larger, and lower the requirements for light-concentrating accuracy of a through solar photo-thermal mirror field system, that is, it can improve the tolerance range of a curved mirror processing, the tolerance range of the mirror field mounting and the tolerance range of solar tracking and concentrating, where the curved mirror is a mirror (not shown in the figure) used in the solar mirror field to concentrate sunlight onto the solar photo-thermal receiver 2. Thus, the purpose of reducing the overall cost of the solar photo-thermal receiving device can be realized.

The solar photo-thermal receiving device may be applied in a Fresnel array solar photo-thermal concentration system, and may make use of the curved mirror to better overcome problems such as the weaker light concentration capacity of Fresnel array type mirror field than the through solar photo-thermal concentration system, and the greater heat loss of the solar photo-thermal receiving device than the through solar photo-thermal concentration system due to difficulty for the Fresnel array solar photo-thermal concentration system to be in the vacuum state integrally. The solar photo-thermal receiving device according to this embodiment can ensure a good comprehensive heat-receiving efficiency of the Fresnel array system, and meanwhile exploiting advantages, such as small covering area, strong wind resistance, low cost, simple tracking, and low construction and maintenance cost, of the Fresnel array solar photo-thermal concentration system to the full.

The solar photo-thermal receiving device may also be applied in a tower type photo-thermal receiving device, increasing fault tolerance of the system and effectively improving heat receiving efficiency.

Obviously, the present invention described herein may have many variations without departing from the true spirit and scope of the present invention. Thus, any modification that is predictable for persons skilled in the art should be included within the scope defined by the appended claims. The protection scope of the present invention should be subject to the appended claims.

## Claims

1. A solar photo-thermal receiving device, consisting of a sealed structure and a solar photo-thermal receiver inside the sealed structure, wherein the solar photo-thermal receiver comprises a secondary absorption heat-exchange pipe and a primary absorption heat-exchange pipe, the temperature of a heat exchange medium inside the secondary absorption heat-exchange pipe is lower than that of a heat exchange medium inside the primary absorption heat-exchange pipe; the secondary absorption heat-exchange pipe receives the heat energy released by the primary absorption heat-exchange pipe and/or receives the solar heat not received by the primary absorption heat-exchange pipe; the solar thermal receiving device takes the heat away via the heat-exchange medium flowing inside the pipes of the solar photo-thermal receiver.

2. The solar photo-thermal receiving device according to claim 1, wherein the solar photo-thermal receiver further comprises a secondary concentration device arranged between the secondary absorption heat-exchange pipe and the primary absorption heat-exchange pipe, and the secondary concentration device assists the primary absorption heat-exchange pipe in obtaining more concentration heat.

3. The solar photo-thermal receiving device according to claim 1 or 2, wherein the solar photo-thermal receiving device is a linear solar receiving device, which is composed of at least one linear solar photo-thermal receiver arranged at a focal line of a linear concentration system.

4. The solar photo-thermal receiving device according to claim 3, wherein the secondary absorption heat-exchange pipe has a plurality of array-arranged metal tubes.

5. The solar photo-thermal receiving device according to claim 3, wherein the heat exchange medium flows through the secondary absorption heat-exchange pipe, and then flows through the primary absorption heat-exchange pipe.

6. The solar photo-thermal receiving device according to claim 1 or 2, wherein a thermal insulation device is arranged at the rear of the secondary absorption heat-exchange pipe.

7. The solar photo-thermal receiving device according to claim 2, wherein the secondary absorption heat-exchange pipe is arranged close to the secondary concentration device.

8. The solar photo-thermal receiving device according to claim 2, wherein the sealed structure comprises a cover glass arranged at an opening of the secondary concentration device of the solar photo-thermal receiver, a coating material for covering the back of the solar photo-thermal receiver, and an end plate of the solar photo-thermal receiving device, all three of them form a closed space.

9. The solar photo-thermal receiving device according to claim 2, wherein the sealed structure is closed at both ends, and is composed of one or more glass pipes in series.

10. The solar photo-thermal receiving device according to claim 1 or 2, wherein the internal space of the sealed structure is in a micro positive pressure state.

11. The solar photo-thermal receiving device according to claim 1 or 2, wherein the inside of the sealed structure is in a static vacuum state or in a dynamic vacuum state.

12. The solar photo-thermal receiving device according to claim 1 or 2, wherein the heat exchange medium flowing inside the solar photo-thermal receiver is heat transfer oil, molten salt, water or gas.

13. The solar photo-thermal receiving device according to claim 1, wherein the solar photo-thermal receiving device is applied in a through solar photo-thermal concentration system, a Fresnel array solar photo-thermal concentration system and a tower type solar photo-thermal concentration system.
